# EUROPÄISCHE PATENTANMELDUNG

(11) **EP 2 116 294 A1**
(43) Veröffentlichungstag der Anmeldung: **11.11.2009**
(21) Anmeldenummer: 08008734.9
(22) Anmeldetag: 09.05.2008
(51) Int. Cl.: B01J 6/00, B01J 8/18, C04B 11/02

(54) **Kalzinierverfahren und- anlage**

(71) Anmelder: Claudius Peters Technologies GmbH, 21614 Buxtehude (DE)
(72) Erfinder: Hilgraf, Peter, 22149 hamburg (DE); Göcke, Volker, 21702 Kakerbeck (DE)
(74) Vertreter: Riesenberg, Axel

(57) **Zusammenfassung**

Die Erfindung betrifft ein Verfahren zum Kalzinieren von pulverförmigem oder feinkörnigem Gut umfassend zwei Schritte, ein Kalzinieren des Guts in einer Kalziniermühle (3) und ein Nachkalzinieren des heißen Guts in einem Reaktionsbehälter (6). Erfindungsgemäß ist vorgesehen, dass dem Reaktionsbehälter (6) als ausschließliche Wärmequelle neben dem heißen Gut Systemabgas (4) der Kalzinieranlage, insbesondere der Kalziniermühle (3), als Reaktionsgas zugeführt wird. Die Erfindung erreicht ohne zusätzlichen Energieaufwand eine Vervollständigung der Kalzinierung, wobei zusätzlich unerwünschte Anhydritanteile verringert werden. Die Produktqualität steigt dadurch. Die Temperatur in der vorgelagerten Kalziniermühle (3) kann so gesenkt werden, was eine zusätzliche Energieeinsparung ermöglicht. Die Erfindung kann auch angewendet werden zur Beschleunigung der Alterung des kalzinierten Guts.

## Beschreibung

Die Erfindung betrifft ein Verfahren zum Kalzinieren von pulverförmigen oder feinkörnigem Gut, wobei das Gut zunächst in einer Kalziniermühle kalziniert wird bevor es in einem Reaktionsbehälter mit Fluidisiereinrichtung nachkalziniert. Des weiteren betrifft die Erfindung ein Verfahren bei dem bereits kalzinierter und abgekühlter Stuckgips in einem Nachreaktor behandelt wird, um seinen Alterungsverlauf zu beschleunigen. Anlagen zur Durchführung dieser Verfahren sind ebenfalls Gegenstand der Erfindung.

Zum Kalzinieren von z.B. Gips wird das Rohmaterial zerkleinert und in einem Reaktor gebrannt. Als Reaktor fungieren häufig Gipskoch- oder Drehrohröfen. Eine alternative Verfahrensführung sieht vor, mittels einer speziellen Kalziniermühle das Zerkleinern und das Brennen zusammenzufassen. Die letztere Bauart bietet Vorzüge hinsichtlich der Energieausnutzung und der Feinheit des Endprodukts. Für eine solche Kalziniermühle kommt als Mahlwerk meist eine Kugel-/Walzringmühle oder auch eine Hammermühle/HIC (Horizontal Impact Calzinator) zum Einsatz. Zusätzlich wird Heißgas zugeführt, mit dem Ziel, im Rohmaterial, beispielsweise Gips, vorhandenes Dihydrat (DH) möglichst optimal in Halbhydrat (HH) umzusetzen. Zum Erreichen einer kurzen Verweildauer in der Kalziniermühle muss ihr Temperaturniveau über der eigentlichen Kälziniertemperatur liegen. Der für eine solche Flash-Kalzinierung erforderliche Energieaufwand ist beträchtlich. Außerdem entsteht unerwünschtes Anhydrit (AIII) im Gips.

Der Erfindung liegt die Aufgabe zu Grunde, den Flash-Kalzinierprozess derart zu verbessern, dass die gleiche oder eine höhere Qualität mit geringerem Energieeinsatz erreicht werden kann.

Die erfindungsgemäße Lösung liegt in den Merkmalen der unabhängigen Ansprüche. Vorteilhafte Weiterbildungen sind Gegenstand der abhängigen Ansprüche.

Die Erfindung erstreckt sich auf ein Verfahren zum Kalzinieren von pulverförmigem oder feinkörnigem Gut umfassend die Verfahrensschritte eines Kalzinierens des Guts in einer Kalziniermühle und einer Nachkalzinierung des heißen Guts in einem Reaktionsbehälter, wobei am Reaktionsbehälter als ausschließliche Wärmequelle neben dem heißen Gut an sich Systemabgas eingesetzt wird, welches als Reaktionsgas verwendet wird.

Eine Anwendung des erfindungsgemäßen Verfahrens betrifft die Beschleunigung des Alterungsverlaufes von Stuckgipsen nach erfolgter Kalzinierung und Abkühlung in einem Nachreaktor, wobei beim Nachreaktor als ausschließliche Wärmequelle Systemabgas aus dem Kalzinierprozess eingesetzt wird. Hierbei wird unter Stuckgips auch Putzgips verstanden.

Die Erfindung betrifft weiterhin Anordnungen zur Durchführung der genannten Verfahren: zum einen eine Kalzinieranlage umfassend eine Kalziniermühle und einen, in Prozesslaufrichtung dahinter liegenden Reaktionsbehälter, wobei der Reaktionsbehälter wärmepassiv ausgeführt ist; zum anderen eine Anlage zur Beschleunigung des Alterungsverlaufs bei Stuckgipsen umfassend eine Kalzinieranlage zur Kalzinierung und anschließender Abkühlung von Gips und einem Nachreaktor zur erneuten Erwärmung des Gipses, wobei der Nachreaktor wärmepassiv ausgeführt ist. Ein Bauteil ist im Sinne dieser Erfindung wärmepassiv, wenn zum Betrieb des Bauteils keine Fremdenergie zugeführt werden muss, sondern lediglich Wärmeenergie, die in anderen Prozessstufen als Verlustenergie entsteht, zugeführt wird. Insbesondere zeichnen sich wärmepassive Bauteile also durch Nichtvorhandensein von Heizeinrichtungen für Prozesswärme aus.

Systemabgas ist solches Gas, das in anderen Prozessstufen der Kalzinieranlage als Abgas anfällt. Insbesondere fallen hierunter Abgas der Kalziniermühle und eines Kühlers.

Die Erfindung geht von einer Kalziniermühle aus, in der das zu kalzinierende Gut einem Zerkleinerungs- und einem Kalzinierprozess unterzogen wird. Dazu sind eine Zerkleinerungsstufe und eine Kalzinierstufe vorgesehen, die beide auch kombiniert sein können. Im Folgenden ist es unerheblich ob die beiden Stufen zusammengefasst sind oder nicht. Das die Kalziniermühle verlassende Gut hat in jedem Fall beide Stufen durchlaufen.

In der Kalziniermühle wird das zerkleinerte Gut auf eine Temperatur von vorzugsweise über 150°C, vorzugsweise zwischen 150°C und 160°C, erhitzt, bei welcher der Kalzinierungsprozess in Gang gesetzt wird und für einige Zeit gebrannt. Die Verweildauer in der Kalziniermühle beträgt bevorzugt 1 bis 10 Sekunden, vorzugsweise 2 bis 6 Sekunden, weiter vorzugsweise 3 Sekunden. Nach dieser sehr kurzen Zeit (Flash-Kalzinierung) ist eine vollständige Kalzinierung nicht gewährleistet. Beim Verlassen der Kalziniermühle ist das Gut nur teilkalziniert und wird so dem Reaktionsbehälter zugeführt, wobei sich das Gut noch in einem heißen Zustand befindet. Die Temperatur des Gutes beträgt in der Regel 100°C oder mehr. Unvermeidlich bei Flash-Kalzinierung ist weiter das Entstehen unerwünschter Komponenten in dem Gut, insbesondere ein erhöhter Anteil von Anhydrit (AIII).

Um diesen der Flash-Kalzinierung anhaftenden Nachteilen zu begegnen, sieht die Erfindung eine energieneutrale Nachkalzinierung im nachgeschalteten Reaktionsbehälter unter Nutzung der erhöhten Temperatur des Guts vor. Die Erfindung hat erkannt, dass allein durch die Wärmeenergie der vorgeschalteten Prozessstufe es möglich ist, diese Nachbehandlung ohne Fremdenergiezufuhr durchzuführen. Im Reaktionsbehälter wird das Doppelhydrat weiter zu Halbhydrat umgewandelt und zugleich das unerwünschte Anhydrit abgebaut. Die Verweilzeit im Reaktionsbehälter kann dank der wärmepassiven Ausgestaltung an sich beliebig gewählt werden und beträgt vorzugsweise 10 bis 30 Minuten, weiter vorzugsweise 15 bis 25, weiter vorzugsweise 20 Minuten.

Das Ergebnis der Nachbehandlung lässt sich weiter verbessern, wenn dem Gut im Reaktionsbehälter Wärmeenergie in Form von Systemabgasen zugeführt wird. Hierbei wird vorzugsweise Abwärme der vorgeschalteten Kalziniermühle oder des nachgeschalteten Kühlers verwendet.

Für den Betrieb des Reaktionsbehälters braucht demnach keine Wärmeenergie eigens erzeugt zu werden. Das bedeutet, dass keine Vorrichtung zum Erzeugen von - im Folgenden - Fremdenergie vorgesehen ist. Zu seinem Betrieb wird die Wärmeenergie aus den anderen Prozessstufen, insbesondere der Kalziniermühle, ausgenutzt.

Dank der Erfindung kann so ohne zusätzlichen Energieaufwand die Kalzinierung vervollständigt werden. Die Produktqualität erhöht sich dadurch und ist somit nicht mehr durch die Kalzinierungsgüte der Kalziniermühle beschränkt. Die Erfindung entkoppelt die Kalzinierungsgüte der Kalziniermühle von derjenigen des Endprodukts. Damit genügt eine gegenüber dem Stand der Technik geringere Kalzinierung in der Kalziniermühle. Das bedeutet, die Temperatur dort kann abgesenkt werden, was Energie einspart; zugleich geht dadurch der Anteil des unerwünschten Anhydrits zurück.

Die Erfindung erreicht mit der Nachkalzination in dem Reaktionsbehälter außerdem eine Vergleichmäßigung. Damit erhöht sich nicht nur die Qualität des kalzinierten Guts, sondern es können auch Zulaufschwankungen beim Zuführen des Rohprodukts ausgeglichen werden. Schwankungen hier schlagen also nicht mehr negativ auf die Produktqualität durch.

Der Reaktionsbehälter sorgt vorzugsweise neben der Nachkalzinierurig auch für eine Durchmischung des Gutes. Dazu ist der Reaktionsbehälter mit mindestens einer Fluidisiereinrichtung ausgestattet. Dadurch kann ein Anbacken bzw. eine Ausbildung toter Zonen im Reaktor verhindert werden und es kommt zu einer intensiven Durchmischung. Als Fluidisiergas kann ebenfalls das Abgas der Kalziniermühle dienen. Es ist aber auch möglich, Umgebungsluft mit dem Abgas zu vermischen oder der Fluidisiereinrichtung getrennt von dem Abgas zuzuführen.

Im Folgenden wird davon ausgegangen, dass es durch das zugeführte Gas zu einer Fluidisierung des Schüttgutes kommt. Es ist jedoch auch möglich, dass das Gut lediglich vom Gas umströmt wird, ohne dass die durch eine fluidähnliche Mischung entstehenden Vorteile ausgenutzt werden. Die Durchmischung und das Verhindern von Anbacken oder der Ausbildung toter Zonen kann auf andere Weise erreicht werden.

Die Produktqualität und Zusammensetzung kann auch durch das verwendete Fluidisiergas beeinflusst werden, da es gleichzeitig auch als Reaktionsgas wirkt. Das feuchte (Wassergehalt etwa 35%) und heiße (> 150°C) Abgas der Kalziniermühle ist hierfür besonders geeignet. Es kann neben einer Temperaturerhöhung auch als Reaktionspartner für die beim Flash-Kalzinieren auftretenden Anhydritanteilen dienen und so den unerwünschten AI-II-Anteil reduzieren. Das Abgas kann aber auch noch mit Umgebungsluft oder Abgasen anderer Komponenten der Anlage vermischt werden, insbesondere des Kühlers. Dadurch ist es möglich, die Temperatur des Fluidisier- bzw. Reaktionsgases zu reduzieren, sowie den Wassergehalt zu regulieren. Dadurch kann beispielsweise das mit Wasserdampf beladene Gas aus dem Lückenvolumen des Schüttgutes ausgetrieben werden. Das Mischungsverhältnis des Gases aus verschiedenen Quellen kann statisch vorgegeben sein. Vorzugsweise wird die Zusammensetzung des zugeführten Gases aber überwacht und gesteuert. Als Steuergrößen bieten sich z.B. die Temperatur und der Wassergehalt an.

Weitere Möglichkeiten der Regelung ergeben sich durch den Einsatz von Mischern und/oder Wasserabscheidern.

Die Erfindung bezieht sich auch auf eine Anlage zur Durchführung des soeben beschriebenen Verfahrens. Zur Erläuterung dieser Anlage wird auf vorstehende Beschreibung verwiesen.

Eine weitere Möglichkeit, die Produktqualität von Gips ohne einen Mehraufwand an Wärmeenergie zu verbessern, liegt in der Beschleunigung des Alterungsverlaufs. Beim Alterungsprozess beginnt der Gips an seiner Oberfläche zu rehydrieren, d.h. AI-II-Bestandteile wandeln sich in Halbhydrat-Bestandteile um. Zur Beschleunigung dieses Prozesses kann nach einer erfolgten Kalzinierung und anschließender Abkühlung eine Nachbehandlung in einem Nachreaktor vorgesehen sein. Dieser Nachreaktor entspricht dem oben beschriebenen Reaktionsbehälter.

Der Nachreaktor weist vorzugsweise eine Fluidisiereinrichtung auf, um für eine gute Durchmischung des Gutes zu sorgen. Das Fluidisiergas kann dabei auch gleichzeitig als Reaktionsgas dienen. Dem Gas können hierzu bei Bedarf reaktionsfördernde oder reaktionshemmende Zusätze zugegeben werden. Das Reaktionsgas kann im Übrigen auch getrennt vom Fluidisiergas in den Nachreaktor eingebracht werden.

Für den Betrieb des Nachreaktors wird keine Wärmeenergie eigens erzeugt. Zu seinem Betrieb wird die Wärmeenergie, die während des Kalzinierprozesses als Verlustenergie auftritt, ausgenutzt. Nicht ausgeschlossen ist jedoch, auch Verlustenergie aus anderen Prozessen dem Nachreaktor zuzuführen.

Die Temperatur des Abgases beträgt vorzugsweise mehr als 150°C und weiter vorzugsweise bis zu 160°C. Es kann eine Temperatursteuerung vorgesehen sein, die dazu ausgebildet ist, durch Zumischen kühleren Gases, wie Umgebungsluft, die Temperatur in dem Nachreaktor zu kontrollieren. Das kühlere Gas kann hierbei dem Abgas zugemischt oder dem Nachreaktor direkt zugeführt werden. Die Temperatursteuerung ist vorzugsweise weiter dazu ausgebildet, den Wassergehalt des Gases im Nachreaktor entsprechend einzustellen.

Eine zur Durchführung dieses Verfahrens geeignete Anordnung ist ebenfalls Gegenstand dieser Erfindung. Zur Erläuterung wird auf die Ausführungen zum dazu gehörigen Verfahren verwiesen.

Die genannten Verfahren werden, um eine gleichbleibend hohe Produktqualität zu gewährleisten, vorzugsweise rechnergesteuert ausgeführt. Dazu sind entsprechende Messfühler und Recheneinheiten vorgesehen.

Ein Nachrüstreaktor für Kalzinieranlagen zur Durchführung dieses Verfahrens ist ebenfalls Gegenstand dieser Erfindung. Der Nachrüstreaktor umfasst eine Zufuhreinrichtung für zumindest teilkalziniertes heißes Gut, einen Reaktionsraum und eine Abfuhreinrichtung für das vollkalzinierte Gut, wobei erfindungsgemäß der Nachrüstreaktor wärmepassiv ausgeführt ist und an ihm eine Abgasleitung für Systemabgas angeschlossen ist, und dass eine Steueranlage vorgesehen ist, die dazu ausgebildet ist, durch Dosieren der zugeführten Abgasmenge und/oder der Abfuhreinrichtung die Temperatur im Reaktionsraum zu steuern. Zur Erläuterung wird auf die Ausführungen zum oben beschriebenen Verfahren verwiesen.

Die Erfindung wird nachfolgend näher erläutert unter Bezugnahme auf die beigefügte Zeichnung, in der vorteilhafte Ausführungsbeispiele dargestellt sind. Es zeigen:
- Fig. 1: eine schematische Übersichtsdarstellung eines Ausführungsbeispiels einer Kalzinieranlage;
- Fig. 2: eine Schnittansicht eines Reaktionsbehälters der Kalzinieranlage gemäß Fig. 1; und
- Fig. 3: eine schematische Übersichtsdarstellung eines Ausführungsbeispiels einer Anlage zur Beschleunigung des Alterungsverlaufs von Stuckgipsen.

Die Erfindung sei anhand eines Ausführungsbeispiels für eine Anlage zum Kalzinieren von Gips erläutert. Rohmaterial für das zu kalzinierende Gut wird an einer Aufgabestelle 1 in die Kalzinieranlage eingebracht. Bei dem Rohmaterial kann es sich insbesondere um recycelte Gipsprodukte handeln, wie Gipsbauplatten, und auch um sogenannten REA-Gips aus Rauchgasentschwefelungsanlagen (REA) handeln. Das Anwendungsgebiet der Erfindung ist nicht nur auf solchen Gips beschränkt, sondern erstreckt sich auch auf andere Arten von synthetischem Gips, insbesondere Phosphor-Gips, es kann aber auch Naturgips verwendet werden. Von der Aufgabestelle 1 gelangt das Gips-Rohmaterial an ein oberes Ende eines Speichersilos 2. Dieser ist erhöht angeordnet und befindet sich oberhalb einer Kalziniermühle 3.

Das zu kalzinierende Gut - in diesem Fall Gips - wird über eine Leitung 12 in die Kalziniermühle 3 eingebracht wird. In der Kalziniermühle 3 wird der Gips zerkleinert und kalziniert. Die Kalzinierung erfolgt als Flash-Kalzinierung. Dies bedeutet eine kurze Verweilzeit von unter 10 Sekunden bei einer Temperatur von 150°C bis 160°C, also oberhalb der eigentlichen Kalziniertemperatur. Dazu ist an die Kalziniermühle 3 ein Heißgasgenerator 31 über eine Zuleitung 32 angeschlossen.

Nach erfolgter Flash-Kalzinierung bei einer Verweildauer von beispielsweise nur 3 Sekunden (die erfindungsgemäß nicht vollständig zu sein braucht) wird der noch über 100°C-heiße Gips über eine Steigleitung 13 von der Kalziniermühle 3 zu einer Filteranlage 5 geführt. Von dort führt eine Leitung 15 an einen erfindungsgemäßen Reaktionsbehälter 6. Dort verweilt es für 20 Minuten und kalziniert in dieser Zeit ohne Fremdenergiezufuhr nach. Die Funktionsweise des ungekühlten Reaktionsbehälters 6 wird noch näher beschrieben. Von dem Reaktionsbehälter 6 wird der immer noch heiße Gips über eine Leitung 16 an ein Aufgabeende eines Drehrohrkühlers 7 transportiert. Nach Durchlaufen des Kühlers 7 wird der gekühlte und der nun vollständig kalzinierte Gips über eine Verteilerleitung 17 in ein Lagersilo 19 geleitet. Aus diesem kann nach Bedarf entnommen werden. Zur Abführung von Abwärme ist eine Anlage für Systemabgas 4 vorgesehen. An sie ist die Kalziniermühle 3, der Filter 5 und der Kühler 7 angeschlossen.

Weiter ist ein Mischer 40 an das Systemabgas 4 angeschlossen. Über eine Leitung 43 wird heißes Abgas mit einer Temperatur von über 150°C von der Kalziniermühle 3 und über eine Leitung 47 von dem Kühler 7 zugeführt. Eine Leitung 41 ist für Zuführung von Umgebungsluft vorgesehen, um so nach Bedarf Umgebungsluft zur Senkung der Abgastemperatur zuzuführen. Das dadurch entstehende Abgasgemisch gelangt zu einen Wasserabscheider 44. In diesem Wasserabscheider 44 kann dem Gasgemisch je nach Bedarf entweder Feuchtigkeit entzogen oder zugesetzt werden. Das so behandelte Abgasgemisch wird durch die Leitung 49 einem Abgas-Anschluss 69 an dem Reaktionsbehälter 6 als Reaktionsgas und ggf. Fluidisiergas zugeführt.

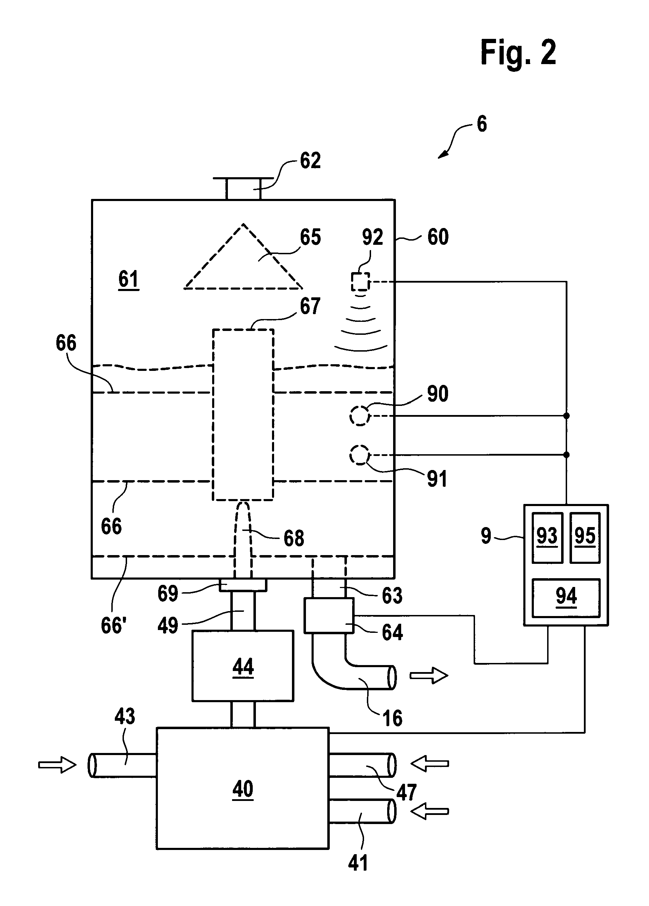

Ein Ausführungsbeispiel für den Nachreaktor 6 ist in Figur 2 näher dargestellt. Der Nachreaktor 6 ist ausgelegt für einen Durchsatz von ca. 35 m3 je Stunde. Er umfasst als Hauptkomponenten ein Gehäuse 60, welches einen Arbeitsraum 61 umschließt, und eine am oberen Ende angeordnete Zufuhreinrichtung 62, in welche die Zuleitung 15 angeschlossen ist, und eine am unteren Ende angeordnete Abfuhreinrichtung 63, welche den nun vollständig kalzinierten Gips über eine Leitung 16 abtransportiert. Im dargestellten Ausführungsbeispiel ist das Gehäuse 60 von zylinderförmiger Gestalt mit einem Durchmesser von etwa 3 Metern, wobei die Zufuhreinrichtung 62 in einer oberen Stirnwand und die Abfuhreinrichtung 63 in einer unteren Stirnwand, dem Boden, angeordnet sind. Die Höhe beträgt etwa 5 Meter. In dem Inneren des gleichfalls zylinderförmigen Arbeitsraums 61 sind mehrere Fluidisierböden 66 in horizontaler Richtung angeordnet. Die Fluidisierböden 66 umfassen im Wesentlichen einen Boden mit darunter angeordneten Hohlkammern zur Zuführung von Fluidisiergas, welches durch Öffnungen in dem Fluidisierboden 66 nach oben austreten kann, und dabei eine auf dem Fluidisierboden 66aufliegende Schicht des zu behandelnden Guts durchströmt und fluidisiert. Am unteren Ende des Arbeitsraums 61 ist ein weiterer Fluidisierboden 66' angeordnet, der zusätzlich Durchbrechungen zum Anschluss der Abfuhreinrichtung 63 aufweist.

Im oberen Bereich des Arbeitsraums 61 befindet sich in Fallrichtung unmittelbar unterhalb der Zufuhreinrichtung 62 ein Dispersionselement 65. Es ist als ein Kegel ausgeführt. Seine Achse liegt koaxial zur Achse des zylindrischen Arbeitsraums 61, wobei die Spitze nach oben zu der Zufuhreinrichtung 62 weist. Zugeführtes Gut fällt in seiner Fallbewegung auf die konische Mantelfläche des Kegels 65, und wird dadurch dank der rotationssymmetrischen Gestaltung gleichmäßig in alle Richtungen nach radial abgelenkt.

In der Achse des zylindrischen Arbeitsraums 61 ist unterhalb des Kegels 65 ein von unten nach oben verlaufendes Steigrohr 67 vorgesehen. Es ist so angeordnet, dass es die beiden Fluidisierböden 66 durchquert. Das Steigrohr weist einen metallischen Rohrmantel auf, der einen freien Querschnitt von 60 cm aufweist. Die Länge des Steigrohrs 67 ist etwa 3 Meter, wobei sein unteres Ende etwa 50 cm über den Boden des Arbeitsraums 61 angeordnet ist. In dem Boden des Gehäuses 60 ist in der Achse und unterhalb des Steigrohrs 67 eine zentrale Düse 68 vorgesehen, der das über den Abgas-Anschluss 69 zugeführte Abgas von dem Mischer 40 zugeführt wird. Die Düse 68 richtet ihren Gasstrom in das Steigrohr 67, wodurch dort der statische Druck abfällt und sich im Arbeitsraum eine Umwälzbewegung ausbildet. Das über den freien Raum zwischen der Düse 68 und in dem Steigrohr strömende Abgas reist Partikel des Guts aus der Umgebung mit, wodurch die mitgerissenen Partikel des Guts wieder in den oberen Bereich in den Arbeitsraums 61 oberhalb der Fluidisierböden 66 befördert werden. Es bildet sich damit eine Umwälzbewegung, indem das über die Fluidisierböden 66 im äußeren Bereich des Arbeitsraums 61 sich nach unten bewegende Gut mittels des Steigrohrs 67 und dem ihm zugeführten Abgasstrom wieder nach oben transportiert wird. Durch diese Umwälzbewegung kann unter Ausnutzung der Restwärme des über die Zufuhreinrichtung 62 eintretenden Guts eine Nachkalzinierung erreicht werden.

In dem Boden des Gehäuses 60 ist die Abfuhreinrichtung 63 mit Auslassstellen angeordnet. Die Auslassstellen umfassen einen Aktuator 64 zum Schließen oder Öffnen der Auslassstelle. Der Aktuator 64 ist mit einer Steueranlage 9 verbunden.

Anstelle des Fluidisierbodens 66 kann auch eine andere Art von Fluidisiereinrichtung vorgesehen sein. Vorzugsweise wird, wie oben beschrieben, zur Fluidisierung das Abgas verwendet, es kann aber zur Fluidisierung auch Umgebungsluft oder ein anderes Gas verwendet werden.

Die Steueranlage 9 umfasst ein Temperaturkontrollmodul 93, ein Feuchtemodul 95 und eine Verweilzeitmodul 94. An dem Reaktionsbehälter 6 angeordnet sind Sensoren ein Temperatursensor 90, ein Feuchtesensor 91 und ein Radarhöhensensor 92, welche an die Steueranlage 9 angeschlossen sind. Die Steueranlage 9 verknüpft die gemessenen Werte und wirkt auf den Mischer 40 ein. Weiter reguliert die Steueranlage die Zuführungen für die Fluidisierluft und die Aktuatoren 64 für die Abfuhr des Guts. Das Temperatur- und Feuchtemodul 93, 95 ist dazu ausgebildet, über den Temperatursensor 90 und den Feuchtesensor 91 die Temperatur und Feuchte im Reaktionsbehälter 6 zu bestimmen. Zur Temperaturerhöhung wird Systemabgas 4 zugeführt und zur Temperatursenkung Umgebungsluft. Soll dabei die Feuchtigkeit erhöht werden, wird feuchtes Abgas aus der Kalziniermühle 3 zugesteuert bzw. es wird auf das trockenere Abgas von anderen Prozessstufen, insbesondere des Kühlers 7 zurückgegriffen. Damit wird erreicht, dass der von der Kalziniermühle 3 kommende Gips unter Nutzung seiner eigenen Wärme und der des zugeführten Abgases kontrolliert nachkalziniert wird. Von der Kalziniermühle 3 nur teilweise kalzinierter Gips wird nachkalziniert, das heißt die Umwandlung Dihydrat zu Halbhydrat wird vervollständigt, und eventuell vorhandenes Anhydrit (AIII) wird zu Halbhydrat. Mittels des Radarhöhensensors 92 steuert die Steueranlage 9 die Abfuhreinrichtung 63 so an, dass der Füllstand und die Verweildauer des Guts in dem Reaktionsbehälter 6 geregelt wird.

Damit kann eine Vergleichmäßigung und Verbesserung der Qualität des kalzinierten Gipses erreicht werden. Zum einen ergibt sich eine Vergleichmäßigung durch Ausgleich kurzzeitiger Schwankungen dank der durch den Aufenthalt im Arbeitsraum 61 erreichten Pufferung. Weiter ergibt sich eine Reduzierung von unerwünschten löslichen Anhydritanteilen sowie von Dihydratanteilen. Ein weiterer beträchtlicher Vorteil liegt in der Reduzierung der Energiekosten durch Nutzung der Materialwärme des Guts nach der Zerkleinerungs- bzw. Kalzinierstufe 3 für die Weiterführung des Kalzinierprozess in dem Reaktionsbehälter 6. Schließlich liegt noch ein weiterer Vorteil in der möglichen Regulierung von Wasser- und Gipswert, Abbindezeit und Restkristallwasser durch Steuerung der Verweilzeit in dem Arbeitsraum 61, sowie gegebenenfalls über die Steuerung der Zufuhr von Wasserdampf.

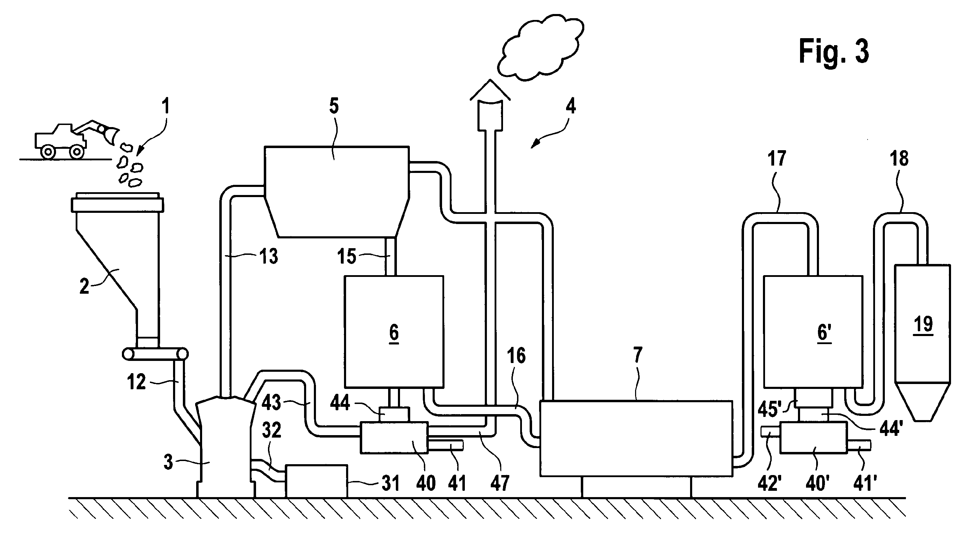

In Fig. 3 ist eine Anlage zur Beschleunigung des Alterungsverlaufs von Stuckgipsen dargestellt.

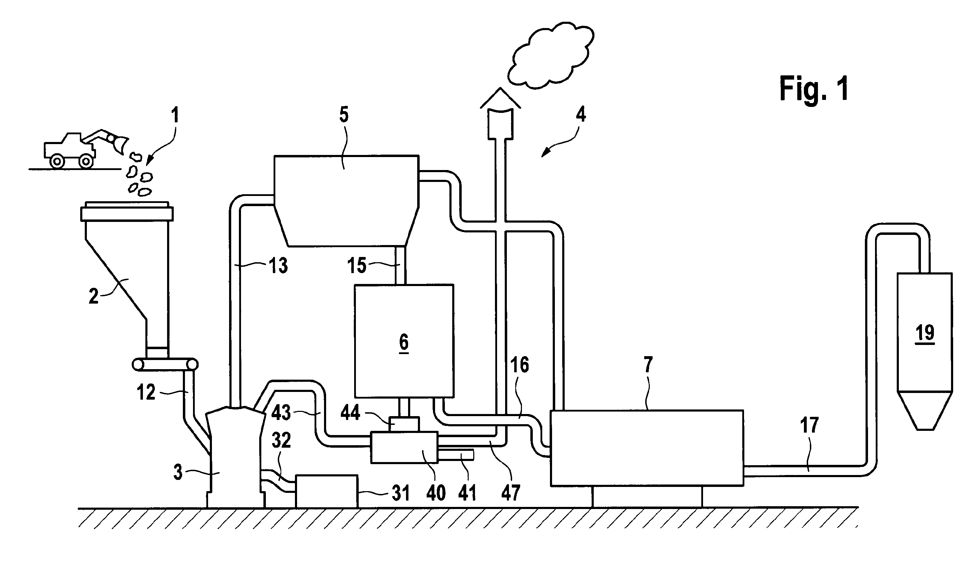

Die Anlage entspricht im Wesentlichen der in Fig. 1 dargestellten Anlage. Gleiche Elemente tragen dieselben Bezugsziffern und haben dieselben Funktionen wie oben im Zusammenhang mit Fig. 1 erläutert, soweit nicht nachstehend anders erläutert.

Zwischen dem Kühler 7 und dem Lagersilo 19 ist ein Nachreaktor 6' angeordnet. Sein Aufbau entspricht im Wesentlichen derjenigen des Reaktionsbehälters 6. Nach erfolgter Kalzinierung und Abkühlung wird das Gut über die Leitung 17 dem Nachreaktor 6' zur Bewirkung einer Alterung zugeführt, bevor es über eine Leitung 18 zu dem Lagersilo 19 abtransportiert wird. Es sei angemerkt, dass die Alterung nicht zwingend in dem hinter dem Kühler 7 angeordneten Nachreaktor 6' erfolgen muss, sondern auch in dem vor dem Kühler 7 angeordneten Reaktionsbehälter 6 erfolgen kann. Umgekehrt kann bei Verwendung des Nachreaktors 6' der Reaktionsbehälter 6 entfallen.

Das während des Kalzinierprozesses entstehende Systemabgas 4, welches vorzugsweise eine Temperatur von über 150°C aufweist, wird über eine Leitung 42' einem Mischer 40' zugeführt. Dort wird es nach Bedarf mit Luft über die Umgebungsluftleitung 41' gemischt, um so die Temperatur zu senken. Das Abgas strömt in den Wasserabscheider 44', wo sein Wassergehalt angepasst werden kann. Weiter strömt es in einer Kontaminationskammer 45'. Dort wird das Gasgemisch mit Zusatzstoffen versetzt, um die Produktqualität des Gipses weiter verbessern zu können.
Das Abgas gelangt dann in den Nachreaktor 6', wo es bevorzugt als Fluidisier- und Reaktionsgas eingesetzt wird. Es kann aber auch vorgesehen sein, das Gas lediglich als Reaktionsgas zuzuführen und für die Fluidisierung anderes Gas bspw. Umgebungsluft zu verwenden.

## Patentansprüche

1. Verfahren zum Kalzinieren von pulverförmigem oder feinkörnigem Gut umfassend
a) ein Kalzinieren des Guts in einer Kalziniermühle (3) und
b) ein Nachkalzinieren des heißen Guts in einem Reaktionsbehälter (6),
**dadurch gekennzeichnet, dass**
dem Reaktionsbehälter (6) als ausschließliche Wärmequelle neben dem heißen Gut Systemabgas (4) als Reaktionsgas zugeführt wird.

2. Verfahren nach Anspruch 1,
**dadurch gekennzeichnet, dass**
das Kalzinieren in der Kalziniermühle (3) als Flash-Kalzinierung erfolgt, vorzugsweise mit einer die Verweildauer von 1 bis 10 Sekunden, weiter vorzugsweise 2 bis 6 Sekunden.

3. Verfahren nach Anspruch 1 oder 2,
**dadurch gekennzeichnet, dass**
die Verweildauer des Guts im Reaktionsbehälter (6) 10 bis 30 Minuten, vorzugsweise 15 bis 25, weiter vorzugsweise 20 Minuten beträgt.

4. Verfahren nach Anspruch 1, 2 oder 3
**dadurch gekennzeichnet, dass**
das Abgas einer Fluidisiereinrichtung (66) des Reaktionsbehälters (6) zugeführt wird.

5. Verfahren nach einem der Ansprüche 1 bis 4,
**dadurch gekennzeichnet, dass**
das Abgas, insbesondere der Kalziniermühle (3) oder eines Kühlers (7), durch einen Mischer (40) mit Umgebungsluft (41) oder durch einen Wärmetauscher abgekühlt wird, bevor es dem Reaktionsbehälter (6) zugeführt wird.

6. Verfahren nach einem der Ansprüche 1 bis 5,
**dadurch gekennzeichnet, dass**
der Wassergehalt des dem Reaktionsbehälters (6) zugeführten Abgases eingestellt werden kann.

7. Verfahren nach einem der Ansprüche 1 bis 6,
**dadurch gekennzeichnet, dass**
das Abgas dem Reaktionsbehälter (6) mit einer Temperatur von mindestens 150°C zugeführt wird.

8. Verfahren zur Beschleunigung des Alterungsverlaufs von Stuckgipsen nach erfolgter Kalzinierung und Abkühlung,
**dadurch gekennzeichnet, dass**
ein Nachreaktor (6') verwendet wird, dem als ausschließliche Wärmequelle Systemabgas (4) als Reaktionsgas zugeführt wird.

9. Verfahren nach Anspruch 8,
**dadurch gekennzeichnet, dass**
das Abgas aus dem Kalzinierprozess durch einen Mischer (40) mit Umgebungsluft (41) oder durch einen Wärmetauscher abgekühlt wird, bevor es dem Nachreaktor (6') zugeführt wird.

10. Verfahren nach Anspruch 8 oder 9,
**dadurch gekennzeichnet, dass**
der Wassergehalt des dem Nachreaktor (6') zugeführten Abgases eingestellt werden kann.

11. Verfahren nach Anspruch 8, 9 oder 10,
**dadurch gekennzeichnet, dass**
dem Abgas aus dem Kalzinierprozess reaktionsbeschleunigende oder reaktionshemmende Zusätze gezielt zugegeben werden.

12. Verfahren nach einem der Ansprüche 8 bis 11,
**dadurch gekennzeichnet, dass**
das Abgas dem Nachreaktor (6') mit einer Temperatur von mindestens 150°C zugeführt wird.

13. Kalzinieranlage umfassend eine Kalziniermühle (3) und einen in Prozesslaufrichtung dahinter liegenden gesonderten Reaktionsbehälter (6),
**dadurch gekennzeichnet, dass**
an dem wärmepassiv ausgeführten Reaktionsbehälter (6) Anschlüsse zur Speisung mit dem Systemabgas (4) vorgesehen sind.

14. Kalzinieranlage nach Anspruch 13,
**dadurch gekennzeichnet, dass**
am Reaktionsbehälter (6) eine Fluidisiereinrichtung (66) vorgesehen ist.

15. Kalzinieranlage nach Anspruch 13 oder 14,
**dadurch gekennzeichnet, dass**
Mischer (40) und/oder Wärmetauscher zum Abkühlen des dem Reaktionsbehälter (6) zugeführten Abgases vorhanden sind.

16. Kalzinieranlage nach Anspruch 13, 14 oder 15,
**dadurch gekennzeichnet, dass**
Wasserabscheider (44) zur Regulierung des Wassergehaltes des zugeführten Abgases vorgesehen sind.

17. Kalzinieranlage nach einem der Ansprüche 13 bis 16,
**dadurch gekennzeichnet, dass**
eine Steueranlage (9) zur Regelung der Temperatur, des Wassergehalts, der Verweildauer und/oder der Füllhöhe im Reaktionsbehälter (6) vorgesehen ist.

18. Anlage zur Beschleunigung des Alterungsverlaufs bei Stuckgipsen umfassend eine Kalzinieranlage zur Kalzinierung und anschließender Abkühlung von Gips und einen Nachreaktor (6') zur erneuten Erwärmung des Gipses,
**dadurch gekennzeichnet, dass**
an dem wärmepassiv ausgeführten Nachreaktor (6') Anschlüsse zur Speisung mit dem Systemabgas (6) der Kalzinieranlage vorgesehen sind.

19. Anlage nach Anspruch 18,
**dadurch gekennzeichnet, dass**
am Nachreaktor (6') eine Fluidisiereinrichtung (66') vorgesehen ist.

20. Anlage nach Anspruch 18 oder 19,
**dadurch gekennzeichnet, dass**
Mischer (40') und/oder Wärmetauscher zum Abkühlen des dem Nachreaktor zugeführten Abgases vorhanden sind.

21. Anlage nach Anspruch 18, 19 oder 20,
**dadurch gekennzeichnet, dass**
Wasserabscheider (44') zur Regulierung des Wassergehaltes des dem Nachreaktor (6') zugeführten Abgases vorgesehen sind.

22. Anlage nach einem der Ansprüche 18 bis 21,
**dadurch gekennzeichnet, dass**
am Nachreaktor (6') eine Einrichtung (45') zum Einbringen von reaktionsbeschleunigenden oder reaktionshemmenden Zusätzen vorgesehen sind.

23. Anlage nach einem der Ansprüche 18 bis 22,
**dadurch gekennzeichnet, dass**
eine Steueranlage (9) zur Regelung der Temperatur, des Wassergehalts, der Verweildauer und/oder der Füllhöhe im Nachreaktor vorgesehen ist.

24. Nachrüstreaktor für Kalzinieranlagen mit einer Zufuhreinrichtung (62) für zumindest teilkalziniertes heißes Gut, einem Reaktionsraum (61) und einer Abfuhreinrichtung (63) für das vollkalzinierte Gut,
**dadurch gekennzeichnet, dass**
der Nachrüstreaktor wärmepassiv ausgeführt ist und an ihm eine Abgasleitung für Systemabgas angeschlossen ist, und dass eine Steueranlage (9) vorgesehen ist, die dazu ausgebildet ist, durch Dosieren der zugeführten Abgasmenge und/oder der Abfuhreinrichtung (63) die Temperatur im Reaktionsraum (61) zu steuern.

25. Nachrüstreaktor nach Anspruch 24,
**dadurch gekennzeichnet, dass**
der Nachrüstreaktor (6) nach einem der Ansprüche 14 bis 17 weitergebildet ist.
